**Europäisches Patentamt**

**European Patent Office**

**Office européen des brevets**

(19)

(11) Veröffentlichungsnummer : **0 328 989 B1**

(12) # EUROPÄISCHE PATENTSCHRIFT

(45) Veröffentlichungstag der Patentschrift :
**20.05.92 Patentblatt 92/21**

(51) Int. Cl.⁵ : **G06F 9/32**

(21) Anmeldenummer : **89102047.1**

(22) Anmeldetag : **06.02.89**

(54) Schaltungsanordnung zur Anpassung eines langsamen Speichers an einen schnellen Prozessor.

(30) Priorität : **18.02.88 DE 3805098**

(43) Veröffentlichungstag der Anmeldung :
**23.08.89 Patentblatt 89/34**

(45) Bekanntmachung des Hinweises auf die
Patenterteilung :
**20.05.92 Patentblatt 92/21**

(84) Benannte Vertragsstaaten :
**CH DE FR IT LI NL SE**

(56) Entgegenhaltungen :
**FR-A- 2 437 031**
**US-A- 3 737 860**
**US-A- 4 130 868**
**US-A- 4 150 430**
**US-A- 4 620 277**

(73) Patentinhaber : **SIEMENS**
**AKTIENGESELLSCHAFT**
**Wittelsbacherplatz 2**
**W-8000 München 2 (DE)**

(72) Erfinder : **Günkel, Hans-Dieter, Dipl.-Ing.**
**Budapester Strasse 20**
**W-8520 Erlangen (DE)**

EP 0 328 989 B1

EP 0 328 989 B1

## Beschreibung

Die Erfindung bezieht sich auf eine Schaltungsanordnung zur Anpassung eines langsamen Speichers an einen schnellen Prozessor, dessen Buszykluszeit wesentlich kürzer ist als die Zugriffszeit des Speichers, wobei ein Programm des Prozessors nach einem Interleave-Verfahren auf wenigstens zwei Speicherbausteine aufgeteilt ist und linear ausgelesen wird, wobei eine Steuereinheit mittels des niederwertigsten Bits einer jeden Adresse den Speicherbaustein bestimmt, dessen Daten ausgelesen werden sollen.

Bei dieser bekannten Schaltungsanordnung ist das Programm eines Prozessors nach dem Interleave-Verfahren in zwei Speicherbausteine, auch Speicherbänke genannt, aufgeteilt. Dabei enthält die erste Speicherbank A, auch "EVEN" genannt, den Programmteil, der durch gerade Adressen angesprochen werden kann. Die zweite Speicherbank B, auch "ODD" genannt, enthält den Programmteil, der durch ungerade Adressen angesprochen werden kann. Damit der Prozessor sein Programm schnell, d.h. ohne wartezyklen, abarbeiten kann, darf die Zugriffszeit der Speicherbausteine höchstens gleich der Buszykluszeit des Prozessors sein. Bei schnellen Prozessoren benötigt man entweder schnelle Speicherbausteine oder Cache-Speicher. Der Nachteil der schnellen Speicherbausteine ist, daß sie nicht so hoch integriert sind, wie beispielsweise die löschbaren programmierbaren Read Only Memories (EPROM), und auch nicht so preiswert sind. Verwendet man Speicherbausteine, deren Zugriffszeit größer ist als dies Buszykluszeit des Prozessors, muß das Programm mit Wartezyklen ausgelesen werden.

US-A-4 620 277 zeigt eine Schaltungsanordnung nach Oberfbegrif von Anspruch 1.

Der Erfindung liegt nun die Aufgabe zugrunde, eine Schaltungsanordnung zur Anpassung eines langsamen Speichers an einen schnellen Prozessor, dessen Buszykluszeit wesentlich kürzer ist als die Zugriffszeit des Speichers anzugeben.

Diese Aufgabe wird erfindungsgemäß durch den Gegenstand des Anspruchs gelöst, wobei jeweils am Ende eines Buslesezyklus eines Speicherbausteins diesem Speicherbaustein die Adresse seines nächsten Speicherzugriffs mit Hilfe der Steuereinheit angelegt wird.

Da das Programm des Prozessors auf zwei Speicherbausteine bzw. Speicherbänke aufgeteilt ist, wird beim linearen Auslesen nur bei jedem zweiten Buszyklus auf ein und die selbe Speicherbank zurückgegriffen. Dadurch entspricht die Zeitdifferenz zwischen zwei aufeinanderfolgenden Speicherzugriffen eines Speicherbausteins der doppelten Buszykluszeit. Diese doppelte Buszykluszeit für jeden Speicherbaustein kann jedoch nur dann für die Bereitstellung von einer Adresse entsprechenden Daten benutzt werden, wenn bereits am Ende eines Buslesezyklus die darauffolgende Adresse an diesem Speicherbaustein angelegt wird. Beim erfindungsgemäßen Verfahren wird mittels einer Steuereinheit jeweils jedem Speicherbaustein am Ende eines jeden Buslesezyklus die Adresse des darauffolgenden Speicherzugriffs angelegt. Somit kann man Programme schneller Prozessoren, die jeweils auf wenigstens zwei langsame hochintegrierte Speicherbausteine aufgeteilt sind, deren Zugriffszeit höchsten gleich der doppelten Buszykluszeit des Prozessors ist, linear mit der Buszykluszeit in den Prozessor einlesen, ohne daß dabei der Prozessor auf Wartezyklen angewiesen ist.

In einem weiteren Verfahrensschritt wird jeweils am Anfang eines jeden Buslesezyklus eines jeden Speicherbausteins die vom Prozessor gelieferte Adresse mit der mittels der Steuereinheit bereitgestellten Adresse verglichen und bei Nichtübereinstimmung der Adressen wird die vom Prozessor gelieferte Adresse den Speicherbausteinen zugeführt. Durch diese Maßnahme kann jederzeit die Steuereinheit erkennen, ob das Programm vom Prozessor linear ausgelesen wird, oder ob ein Sprungbefehl vorliegt. Beim Vorliegen eines Sprungbefehls wird die vom Prozessor gelieferte Adresse an die Speicherbausteine gelegt. Nachdem die Adressen an den Speicherbausteinen anstehen, muß der Prozessor die volle Zugriffszeit des Speicherbausteins warten, bis die Daten eines Speicherbausteins ausgelesen werden können und das Programm linear weiter abgearbeitet werden kann. Am Ende des Buslesezyklus wird bereits dem ausgelesenen Speicherbaustein die Adresse seines nächsten Speicherzugriffs angelegt.

Bei einer vorteilhaften Schaltungsanordnung zur Durchführung des Verfahrens mit einem Prozessor und wenigstens zwei Speicherbausteinen, denen jeweils n-1 Bits einer jeden Adresse zugeführt werden, wobei das niederwertigste Bit einer jeden vom Prozessor bereitgestellten Adresse einer Steuereinheit zugeführt ist, die in Abhängigkeit dieses Bits jeweils einen der beiden Speicherbausteine ausliest, sind die n-1 Bits jedem Speicherbaustein jeweils über einen programmierbaren Aufwärtszähler zugeführt, dessen Count Up-Eingang mit der Steuereinheit verbunden ist.

Bei dieser Schaltungsanordnung werden die vom Prozessor gelieferten Adressen nicht direkt an die beiden Speicherbausteine angelegt, sondern jeweils über einen programmierbaren Aufwärtszähler. Am Ende eines jeden Buslesezyklus wird die Adresse des soeben gelesenen Speicherbausteins geändert, indem der Zählerstand des Zählers um eins erhöht wird, wodurch an diesem Speicherbaustein die Adresse des nächsten Speicherzugriffs bereits am Speicherbaustein ansteht. Jeder Zähler ist mittels eines Count Up-Eingangs mit der Steuereinheit verbunden, die am Ende jedes Buslesezyklus einen Zählimpuls liefert.

2

In einer weiteren vorteilhaften Ausführungsform der Schaltungsanordnung ist jedem Aufwärtszähler ein Komparator zugeordnet, der n-1 Bits des Aufwärtszählers vergleicht, und ist jeweils der Ausgang des Komparators mit der Steuereinheit verknüpft, die ihrerseits jeweils mit einem Load-Eingang eines Aufwärtszählers verbunden ist.

Durch diese Gestaltung der Schaltungsanordnung wird erreicht, daß die Steuereinheit jeweils feststellen kann, ob vom Prozessor das Programm linear abgearbeitet wird oder ob ein Sprungbefehl vorliegt. Liegt ein Sprungbefehl vor, so generiert die Steuereinheit ein Load-Signal, wodurch die an den Zählern anstehende Adresse in den Zähler geladen wird. Dadurch steht am zu lesenden Speicherbaustein die vom Prozessor gelieferte Adresse und am anderen Speicherbaustein die darauffolgende Adresse an. Nach einer vollen Zugriffszeit wird der zu lesende Speicherbaustein ausgelesen und der Zählerstand des zugehörigen Zählers um eins erhöht, wodurch die Adresse des nächsten Speicherzugriffs bereits am soeben gelesenen Speicherbaustein ansteht.

Zur weiteren Erläuterung der Erfindung wird auf die Zeichnung Bezug genommen, in der Ausführungsbeispiele nach der Erfindung schematisch veranschaulicht sind.

FIG 1 zeigt eine Schaltungsanordnung zur Durchführung des erfindungsgemäßen Verfahrens und in

FIG 2 ist eine vorteilhafte Ausführungsform der Schaltungsanordnung nach FIG 1 dargestellt.

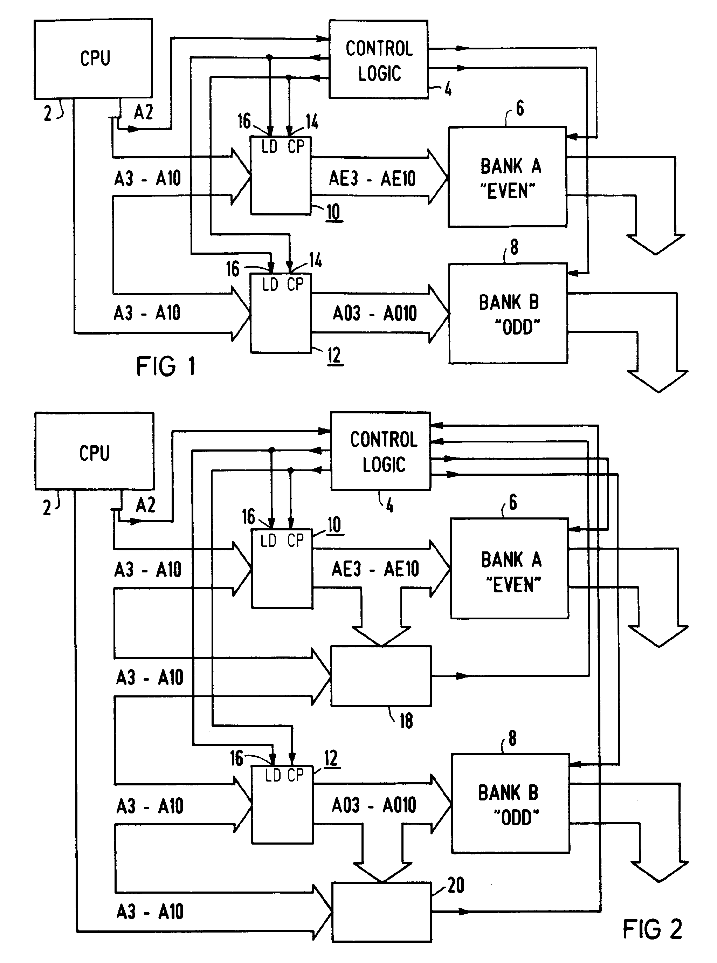

Die FIG 1 zeigt eine Schaltungsanordnung, die einen Prozessor 2, eine Steuereinheit 4, zwei Speicherbausteine 6 und 8 und zwei Zähler 10 und 12 enthält. Als Speicherbaustein 6 und 8 sind langsame, hochintegrierte preiswerte Speicherbausteine, beispielsweise löschbare programmierbare Read Only Memories EPROM, vorgesehen. Als langsam werden Speicherbausteine bezeichnet, deren Zugriffszeit größer als die Buszykluszeit des auf die Speicherbaustein 6 und 8 zugreifenden Prozessors 2 ist. Das Programm, das der Prozessor 2 linear aus den Speicherbausteinen 6 und 8 auslesen soll, ist in den beiden Speicherbausteinen 6 und 8 derart aufgeteilt, daß der Teil des Programms, der mit geraden Adressen aufgerufen werden kann, in den Speicherbaustein 6 abgelegt ist. Darum bezeichnet man diesen Speicherbaustein 6 auch als Bank A bzw. "EVEN". Der Teil des Programms, der mit ungeraden Adressen aufgerufen werden kann, ist in dem Speicherbaustein 8 abgelegt, der deshalb auch als Bank B bzw. "ODD" bezeichnet wird. Dem Speicherbaustein 6 bzw. 8 ist ein Zähler 10 bzw. 12 zugeordnet, d.h. die Bitkombination an den Ausgängen des Zählers 10 bzw. 12 auch als Adresse bezeichnet, wird direkt an den Speicherbaustein 6 bzw. 8 angelegt. Als Zähler 10 bzw. 12 ist ein programmierbarer Aufwärtszähler vorgesehen. Die Steuereinheit 4 ist mittels Steuerleitungen mit einem Count Up-Eingang 14 und einem Load-Eingang 16 eines jeden Zählers 10 bzw. 12 verknüpft. Mit Hilfe dieser Verknüpfung kann die Steuereinheit 4 den Zähler 10 bzw. 12 inkrementieren bzw. laden. Außerdem ist die Steuereinheit 4 jeweils über eine Steuerleitung mit einem Speicherbaustein 6 bzw. 8 verbunden, wodurch die Steuereinheit 4 den Speicherbaustein 6 bzw. 8 auslesen kann. Vom Prozessor 2 erhält die Steuereinheit 4 von jeder bereitgestellten Adresse mit der Bitkombination A2 - A10 das niederwertigste Bit A2, wodurch die Steuereinheit bestimmen kann, welcher Speicherbaustein 6 oder 8 ausgelesen werden soll. Die n-1 verbleibenden Bits A3 - A10 pro Adresse werden jeweils dem Zähler 10 und 12 zugeführt. An den Ausgängen des Zählers 10 steht jeweils eine gerade Adresse mit der Bitkombination AE3 -AE10 und an den Ausgängen des Zählers 12 steht jeweils eine ungerade Adresse mit der Bitkombination A03 - A010 an.

Nach einem Reset-Signal, beispielsweise nach Einschalten des Rechners, wird die erste vom Prozessor 2 bereitgestellte Adresse in beide Zähler 10 und 12 geladen. Mit dem Laden des Zählers 10 und 12 steht jeweils eine Adresse am Speicherbaustein 6 bzw. 8 an. Der schnelle Prozessor 2 muß nun die volle Zugriffszeit des Speicherbausteins 6 bzw. 8 abwarten, bis die Daten stabil am Speicherausgang anstehen und ausgelesen werden können. Am Ende des Buslesezyklus wird die Adresse des soeben gelesenen Speicherbausteins 6 über den Zähler 10 geändert, indem der Zählerstand um eins erhöht wird. Die unter der nächstfolgenden Adresse (ungerade) stehenden Daten werden nun mit dem folgenden Buslesezyklus aus dem Speicherbaustein 8 gelesen, wobei am Ende des Buslesezyklus die Adresse des soeben gelesenen Speicherbausteins 8 über den Zähler 12 geändert wird, indem der Zählerstand um eins erhöht wird. Somit kann man mit diesem Verfahren ein Programm, das nach dem Interleave-Verfahren in zwei Speicherbausteine 6 und 8 aufgeteilt ist, mit der Buszykluszeit des Prozessors 2 auslesen, obwohl die Zugriffszeit der Speicherbausteine 6 und 8 jeweils größer als die Buszykluszeit ist.

In einer weiteren Schaltungsanordnung ist jedem Zähler 10 und 12 ein Komparator 18 und 20 zugeordnet. Der Komparator 18 bzw. 20 vergleicht die vom Prozessor 2 gelieferte Adresse mit der Bitkombination A3 - A10 mit der an den Ausgängen des Zählers 10 anstehenden Adresse mit der Bitkombination AE3 - AE10 bzw. mit der an den Ausgängen des Zählers 12 anstehenden Adresse mit der Bitkombination A03 - A010. Wenn der Komparator 18 bzw. 20 keine Übereinstimmung feststellt, so gibt der Komparator 18 bzw. 20 ein entsprechendes Signal an die Steuereinheit 4 ab. Die Steuereinheit 4 generiert daraufhin ein Load-Signal, das den Zählern 10 und 12 über den Load-Eingang 16 zugeführt wird. Dadurch wird die anstehende Adresse des Prozessors 2 in die Zähler 10 und 12 geladen. Aus der vom Prozessor 2 gelieferten Adresse erkennt die Steuereinheit 4, ob auf den Speicherbaustein 6 ("EVEN") oder auf den Speicherbaustein 8 ("ODD") zugegriffen werden soll. Sobald auf den Speicherbaustein 8 zugegriffen werden soll, generiert die Steuereinheit 4 für den Speicherbaustein 6 direkt nach dem Load-Signal ein Inkrement-Signal. Am Ende der Zugriffszeit des Speicherbausteins 6 bzw. 8 stehen die entsprechenden Daten stabil am Ausgang des Speicherbausteins 6 bzw. 8 an und können ausgelesen werden. Während des nächsten Buslesezyklus wird der Speicher 8 bzw. 6 ausgelesen. Auch hier wird die Adresse des soeben gelesenen Speicherbausteins 8 bzw. 6 über die Zähler 12 bzw. 10 geändert, indem der Zählerstand um eins erhöht wird.

Durch die Verwendung der Komparatoren 18 und 20 kann die Steuereinheit 4 erkennen, ob das Programm vom Prozessor 2 linear abgearbeitet wird, oder ob ein Sprungbefehl vorliegt. Sobald ein Sprungbefehl vorliegt, müssen die Zähler 10 und 12, wie bei einem Reset-Signal, geladen werden und der Prozessor 2 muß einmal die volle Zugriffszeit des Speicherbausteins 6 bzw. 8 warten, bis das Programm wieder mit der Buszykluszeit in den Prozessor 2 eingelesen werden kann.

## Patentansprüche

1. Schaltungsanordnung zur Anpassung eines langsamen Speichers an einen schnellen Prozessor (2), der während seines Programmablaufs mindestens abschnittsweise mit jeweils inkrementell von einer jeweiligen Basisadresse fortschreitenden n-bit breiten Adressen Daten aus dem Speicher ausliest, wobei die Buszykluszeit des Prozessors (2) wesentlich kürzer ist als die Zugriffszeit des Speichers, d.h. die Zeitspanne vom Anlegen einer Adresse bis zum Datenausgabe, wobei ausgehend von einer ersten Basisadresse ein Adreßregisten mit jeder Datenausgabe über eine Steuereinheit (4) mit einer inkrementierten Adresse versehen wird und den Speicher für ein Auslesen der für diese Adresse relevanten Daten vorbereitet, wobei ein Adreßvergleicher diese Adresse mit der im Programmablauf tatsächlich auftretenden Adresse vergleicht und bei Gleichheit die vorbereitete Ausgabe veranlaßt und andernfalls die vom Prozessor gelieferte Adresse als neue Basisadresse anlegt, **dadurch gekennzeichnet**, daß der Speicher in zwei Speicherbausteine (6,8) aufgeteilt ist, von denen der erste (6) die Daten zu den geradzahligen Adressen und der zweite (8) die Daten zu den ungeradzahligen Adressen beinhaltet, daß das niederwertigste bit der vom Prozessor (2) ausgegebenen Adresse den ersten bzw. zweiten Speicherbaustein (6,8) aktiviert, dessen Adressierung dann ausgehend von den n-1 höchstwertigen bits der Basisadresse bzw. der jeweiligen inkrementierten Adresse erfolgt, wobei als Adreßregister für jeden Speicherbaustein (6,8) ein n-1 bit breiter voreinstellbarer Aufwärtszähler (10,12) vorgesehen ist, dessen jeweiliger Count-Up-Eingang mit der Steuereinheit (4) verbunden ist, wobei jedem Aufwärtszähler (10,12) ein gesonderter Komparator (18,20) zugeordnet ist, der einerseits die vom Prozessor (2) gelieferten n-1 bit breiten Adressen mit den n-1 bit breiten Adressen des jeweiligen Aufwärtszählers (10,12) vergleicht und daß jeweils der Komparatorausgang mit der Steuereinheit (4) verknüpft ist, die ihrerseits jeweils mit dem jeweiligen load-Eingang der Aufwärtszähler (10,12) verbunden ist.

## Claims

1. Circuit arrangement to adapt a slow memory to a fast processor (2), which during its program flow reads out data from the memory at least in sections with n-bit wide addresses progressing in each case incrementally from a respective base address, whereby the bus cycle time of the processor (2) is substantially shorter than the access time of the memory, i.e. the time duration from the application of an address up to the data output, whereby, proceeding from a first base address, an address register with each data output is provided with an incremented address via a control unit (4) and prepares the memory for a read-out of the data relevant for this address, whereby an address comparator compares this address with the address actually occurring in the program flow and upon equality causes the prepared output, and otherwise applies the address supplied by the processor as new base address, characterized in that the memory is divided up into two memory modules (6,8), of which the first (6) contains the data for the even-numbered addresses and the second (8) the data for the odd-numbered addresses, in that the bit of lowest value of the address issued by the processor (2) activates the first or second memory module (6,8), whose addressing then takes place proceeding from the n-1 bits of highest value of the base address or of the respective incremented address, whereby as address register for each memory module (6,8) an n-1 bit wide preadjustable up-counter (10,12) is provided, whose respective count-up input is connected to the control unit (4), whereby a separate comparator (18,20) is associated with each up-counter (10,12), which comparator on one side compares the n-1 bit wide addresses supplied by the processor (2) with the n-1 bit wide addresses of the respective up-counter (10,12) and in that in each case the comparator output is linked with the control unit (4), which for its part is connected in each case to the respective load-input of the up-counter (10,12).

**Revendications**

1. Montage pour adapter une mémoire lente à un processeur rapide (2), qui pendant l'exécution de son programme, lit, au moins par sections, des données à partir de la mémoire, avec des adresses d'une largeur de n bits, qui progressent respectivement incrémentalement à partir d'une adresse respective de base, que la durée du cycle de bus du processeur (2) est nettement plus courte que la durée d'accès à la mémoire, c'est-à-dire l'intervalle de temps s'étendant de l'application d'une adresse jusqu'à la délivrance des données, et selon lequel à partir d'une première adresse de base, un registre d'adresses est pourvu d'une adresse incrémentée par l'intermédiaire d'une unité de commande (4), lors de chaque sortie de données, et prépare la mémoire pour une lecture des données associées à cette adresse, et dans lequel un comparateur d'adresses compare cette adresse à l'adresse apparaissant effectivement lors de l'exécution du programme et, en cas d'égalité, déclenche la sortie préparée et, sinon, applique en tant que nouvelle adresse de base l'adresse délivrée par le processeur, caractérisé par le fait que la mémoire est subdivisée en deux modules de mémoire (6,8), dont le premier (6) contient les données associées aux adresses paires et le second (8) contient les données associées aux adresses impaires, que le bit de poids le plus faible de l'adresse délivrée par le processeur (2) active le premier ou le second module de mémoire (6,8), dont l'adressage s'effectue alors à partir des n-1 bits de poids les plus élevés de l'adresse de base ou de l'adresse respective incrémentée, et dans lequel il est prévu comme registre d'adresses pour le second module de mémoire (6,8) un compteur progressif réglable (10,12) possédant une largeur de n-1 bits et dont l'entrée respective de comptage progressif est raccordée à l'unité de commande (4), et dans lequel à chaque compteur progressif (10,12) est associé un comparateur particulier (18,20), qui compare d'une part les adresses possédant une largeur de n-1 bits délivrées par le processeur (2) aux adresses possédant une largeur de n-1 bits et délivrées par le compteur progressif respectif (10,12), et que la sortie du comparateur est raccordée respectivement à l'unité de commande (4), qui pour sa part est raccordée respectivement à l'entrée respective de chargement des compteurs progressifs (10,12).

FIG 1

FIG 2